# EUROPÄISCHE PATENTANMELDUNG

(11) **EP 0 555 810 A1**
(43) Veröffentlichungstag der Anmeldung: **18.08.1993**
(21) Anmeldenummer: 93101978.0
(22) Anmeldetag: 09.02.1993
(51) Int. Cl.: B23Q 16/02, F16B 29/00

(54) **Positioniervorrichtung für zwei zu fügende Bauteile**

(30) Priorität: 11.02.1992 DE 4203853
(71) Anmelder: Meywald, Günter, D-34454 Arolsen (DE)
(72) Erfinder: Meywald, Günter, D-34454 Arolsen (DE)
(74) Vertreter: Rehberg, Elmar, Dipl.-Ing.

(57) **Zusammenfassung**

Bei einer Positioniervorrichtung (5) für zwei zu fügende Bauteile (6, 7) sind gegenüberliegende Bohrungen (8, 9) in den beiden Bauteilen (6, 7) sowie Positionierelemente (1) mit einer Symmetrieachse (4) sowie Ausrichtflächen (3) vorgesehen. Die Ausrichtflächen (3) dienen zur Anlage an Abstützflächen (10, 11) in den Bohrungen (8, 9). Zumindest die an den Abstützflächen (10, 11) einer der Bohrungen (8, 9) zur Anlage kommenden Ausrichtflächen (3) der Positionierelemente (1) sind in radialer Richtung zur Symmetrieachse (4) gegen Federkraft verschiebbar ausgebildet. Dabei sind die verschiebbaren Ausrichtflächen (3) auf einem Kegelmantel um die Symmetrieachse (4) angeordnet sind, wobei die Abstützfläche (10, 11) in der zugeordneten Bohrung (8, 9) konisch mit etwa gleichem Öffnungswinkel wie der Kegelmantel ausgebildet ist.

## Beschreibung

Die Erfindung bezieht sich auf eine Positioniervorrichtung für zwei zu fügende Bauteile mit gegenüberliegenden Bohrungen in den beiden Bauteilen und mit eine Symmetrieachse sowie Ausrichtflächen aufweisenden Positionierelementen, wobei die Ausrichtflächen zur Anlage an Abstützflächen in den Bohrungen vorgesehen sind und wobei zumindest die an den Abstützflächen einer der Bohrungen zur Anlage kommenden Abstützflächen der Positionierelemente in radialer Richtung zur Symmetrieachse gegen Federkraft verschiebbar ausgebildet sind. Das eine Bauteil ist hierbei beispielsweise ein Maschinentisch, wahrend es sich bei dem anderen Bauteil um eine Wechselpalette handeln kann. Ebenso ist an eine Aufspannunterlage und ein zu spannendes Werkstück oder auch an das Oberteil und das Unterteil eines in eine Presse eingebauten Werkzeugs zu denken. Die Aufgabe der Positioniervorrichtung besteht dann darin, eine definierte Relativlage des einen Bauteils zu dem anderen sicherzustellen. Nur so ist beispielsweise ein gegenüber dem einen Bauteil ausgerichtetes Werkzeug zur präzisen Bearbeitung des anderen Bauteils einsetzbar oder das gewünschte Zusammenspiel des Oberteils und des Unterteils eines Zielwerkzeugs erreichbar.

Eine Positioniervorrichtung der eingangs beschriebenen Art ist aus der DE-OS 40 23 583 bekannt. Hierbei sind die an den Abstützflächen zumindest einer der Bohrungen zur Anlage kommenden, in radialer Richtung zu der Symmetrieachse der Positionierelemente gegen Federkraft verschiebbaren Ausrichtflächen die Umfangsflächen einer Tellerfeder. Diese Tellerfeder wird beim Fügen der Bauteile elastisch verformt, so daß sich ihre Umfangsfläche vergrößert und federnd an die Abstützflächen in der Bohrung anlegt. Zur elastischen Verformung der Tellerfeder ist ein Spreiz- und Druckkörper vorgesehen, der beispielsweise die Form einer Kugel mit einem Außendurchmesser größer als der Innendurchmesser der Tellerfeder aufweist. Zusätzlich zu der Tellerfeder ist eine elastische Membran vorgesehen, die im Prinzip die gleiche Form und Funktion wie die Tellerfeder aufweist und eine Art Vorpositionierung vor dem eigentlichen Positionieren durch elastisches Verformen der Tellerfeder bewirkt. Mit der bekannten Positioniervorrichtung können zwar gewisse Toleranzen in der Lage der Bohrungen in den zwei zu fügenden Bauteilen ausgeglichen werden, sie weist aber einen recht komplizierten Aufbau auf. Dies gilt insbesondere, wenn sowohl eine Tellerfeder als auch eine elastische Membran in jeweils beiden sich gegenüberliegenden Bohrungen angeordnet sind.

Bei der einfachsten bekannten Positioniervorrichtung für zwei zu fügende Bauteile dienen sogenannte Paßstifte als Positionierelemente. Die Paßstifte weisen zylindrische Form auf, wobei die radialen Außenflächen der Zylinder als Ausrichtflächen vorgesehen sind. Die zugeordneten Bohrungen sind ebenfalls zylindrisch ausgebildet, wobei die radialen Innenflächen der Bohrungen als Abstützflächen für die radialen Außenflächen der Paßstifte vorgesehen sind. Um eine präzise Positionierung der beiden Bauteile zu erreichen, müssen die Außendurchmesser der Paßstifte sehr genau den Innendurchmessern der Bohrungen entsprechen. Dies führt jedoch zu Schwierigkeiten bereits zu Beginn des Fügens der Bauteile. Die Paßstifte können nur dann zugleich in die Bohrungen in beiden Bauteilen eingreifen, wenn diese sich bereits exakt in den gewünschten Relativpositionen befinden. Ein Anfasen der Paßstifte reduziert diese Bedingung zwar etwas, ändert jedoch nichts an dem grundsätzlichen Problem. Weiterhin nachteilig bei der bekannten Vorrichtung ist, daß die Bohrungen und Paßstifte für ein genaues Positionieren sehr präzise gefertigt werden müssen. Dies führt andererseits dazu, daß die bekannte Positioniervorrichtung nicht in der Lage ist, Toleranzen zu überbrücken. Diese Toleranzen treten beispielsweise zwangsläufig auf, wenn das eine Bauteil ein Maschinentisch ist, auf den nacheinander eine Vielzahl von Wechselpaletten als anderes Bauteil befestigt werden soll.

Bei einer anderen, aus der DE-OS 38 01 654 bekannten Positioniervorrichtung der eingangs beschriebenen Art ist ein Positionierelement mit einem Dehnbereich vorgesehen. Der Dehnbereich weist eine zylindermantelförmige Ausrichtfläche auf, die einer zylindrischen Bohrung zugeordnet ist. Der Radius des Zylindermantels, auf dem die Ausrichtfläche des Dehnbereichs angeordnet ist, ist mittels hydraulischem Druck vergrößerbar. Auf diese Weise lassen sich vorteilhaft sowohl Toleranzen zwischen dem Innendurchmesser der Bohrung und dem Außendurchmesser des Dehnbereichs im nichtbeaufschlagten Zustand, als auch Toleranzen im Abstand der Bohrungen untereinander überbrücken. Die DE-OS 38 01 654 beschreibt neben Positionierelementen mit zwei, jeweils einer der Bohrung zugeordneten Dehnbereichen auch solche Positionierelemente, bei denen die weiteren Ausrichtflächen starr auf einem Kegelmantel angeordnet sind und an entsprechenden Abstützflächen in den Bohrungen zur Anlage kommen. Die kegelmantelförmige Ausbildung der Ausricht- und Abstützflächen hat Vorteile bei der Zentrierung der Positionierelemente in dem jeweiligen Bauteil. Nachteilig ist bei der bekannten Positioniervorrichtung, daß zum eigentlichen Positionieren der hydraulische Druck durch Verdrehen einer Schraube an den Positionierelementen aufgebracht werden muß. Dies ist nicht nur zeitaufwendig, da die Schraube erst einmal überhaupt zugänglich sein muß und entsprechende Zugangsöffnungen vorzusehen sind. Die Positionierelemente sind zudem relativ kompliziert aufgebaut und daher kostspielig.

Aus der DE-PS 25 37 146 ist eine Positioniervorrichtung für zwei zu fügende Bauteile bekannt, die ebenfalls gegenüberliegende Bohrungen in den beiden Bauteilen und in die beiden Bauteile eingreifende Positionierelemente aufweist. Die Abstützflächen in den Bohrungen sind konisch, d. h. kegelmantelförmig ausgebildet, die Positionierelemente besitzen Kugelform. Auf diese Weise ergibt sich jeweils eine linienförmige Anlage der Positionierelemente in den Bohrungen. Der Kugeldurchmesser der Positionierelemente ist so gewählt, daß zwischen den Bauteilen vor dem Aufbringen einer Spannkraft ein Fügespalt verbleibt. Während des Überbrückens des Fügespalts beim Aufbringen der Spannkraft erfolgt die Ausrichtung der zu fügenden Bauteile. Hierbei werden die Positionierelemente in die Abstützflächen in den Bohrungen unter Verformung des die Bohrungen umgebenden Materials der Bauteile eingedrückt. Als Vorteil dieser Positioniervorrichtung stellt sich die hohe Positioniergenauigkeit heraus. Weiterhin ergibt sich ein günstiger Selbstzentrierungseffekt. Zu Beginn des Fügens vorliegende Ungenauigkeiten bei den relativen Positionen der zu fügenden Bauteile gleichen sich beim Fügen automatisch aus. Als nachteilig stellt sich jedoch heraus, daß die Positionierelemente und die Bohrungen für die bekannte Positioniervorrichtung mit äußerster Präzision gefertigt werden müssen. Anderenfalls ergeben sich Fügespalte, die nur mit extrem hohen Spannkräften auszugleichen sind. Hiermit ist zudem eine enorme Materialbelastung der Bauteile im Bereich der Bohrungen verbunden. Bei hinsichtlich der aufzubringenden Spannkraft annehmbaren Fügespalten ist andererseits die Positionierwirkung der Positioniervorrichtung nur sehr schwer auszunutzen. Es ist kaum möglich, den Fügespalt zwischen den zu fügenden Bauteilen teilweise und gleichmäßig zu verringern, so daß die Positioniereinrichtung irgendwelche Toleranzen ausmitteln kann. Die aus der DE-PS 25 37 146 bekannte Positioniervorrichtung ist daher trotz guter Grundvoraussetzungen für den praktischen Einsatz insbesondere in der Serienfertigung wenig geeignet.

In der WO 88/10172 wird eine Weiterentwicklung der aus der DE-PS 25 37 146 bekannten Positioniervorrichtung beschrieben. Dem Problem der Fügespalte wird hierbei dadurch begegnet, daß nunmehr Lochscheiben in den Bohrungen vorgesehen sind, deren zentrale Öffnung einen kleineren Durchmesser als die kugelförmigen Positionierelemente aufweisen. Die Begrenzungen der zentralen Öffnungen der Lochscheiben dienen als Abstützflächen für die Positionierelemente. Beim Überbrücken des Fügespalts, der vor dem Aufbringen der Spannkraft vorliegt, werden demnach die Lochscheiben durchgebogen, d. h. in Spannrichtung elastisch verformt. Die hierbei auftretenden Federkräfte sind vorteilhaft kleiner als beim Einpressen der kugelförmigen Positionierelemente in das massive, die Bohrungen umgebende Material der Bauteile. Nachteilig ist jedoch, daß die Lochscheiben mit äußerster Präzision in die Bohrungen eingepaßt werden müssen. Toleranzen in diesem Bereich machen die Genauigkeit der gesamten Positioniervorrichtung zunichte. Auch ergibt sich durch die Anordnung der Lochscheiben in den Bohrungen ein relativ komplizierter Aufbau der gesamten Positioniervorrichtung.

Aus der DE-OS 38 31 736 ist eine weitere Weiterentwicklung der Positioniervorrichtung gemäß der DE-PS 25 37 146 bekannt. Wiederum geht es dabei um das Problem des Fügespalts. Zu seiner Lösung wird hier vorgeschlagen, die konischen, zur Aufnahme der Positionierelemente dienenden Bohrungen bei einem der Bauteile nicht in dem Bauteil selbst, sondern in an dem Bauteil federnd gelagerten Auslegern vorzusehen. So ist es möglich, auch einen größeren Fügespalt zwischen den Bauteilen selbst mit einer begrenzten Spannkraft zu überbrücken. Im Bereich der Bohrungen, also zwischen den Auslegern des einen Bauteils und dem anderen Bauteil verbleibt der Fügespalt natürlich. Die Spannkraft wird nicht von einer Verformung der Abstützflächen in den Bohrungen sondern von den abfedernden Auslegern des einen Bauteils aufgenommen. Als elementarer Nachteil dieser Positioniervorrichtung ist anzusehen, daß die Ausleger an dem einen Bauteil vorhanden sein müssen. Dies ist üblicherweise nicht der Fall. Die Positioniervorrichtung kann daher nicht nachträglich oder gar unter Verwendung vorhandener Bohrungen verwirklicht werden. Weiterhin ist beachtlich, daß die Präzision der Positioniervorrichtung eine gleichartige Ausbildung aller Ausleger an dem einen Bauteil erfordert. Hierdurch wird der notwendige Aufwand noch weiter gesteigert.

Aus der GB-PS 909 059 ist eine Positioniervorrichtung für zwei zu fügende Bauteile mit gegenüberliegenden, ringförmigen Nuten in den beiden Bauteilen und mit ringförmigen, jeweils in ein Paar gegenüberliegender Nuten eingreifenden Positionierelementen bekannt. Die Nuten weisen hierbei dreieckigen Querschnitt auf, während der Querschnitt der Positionierelemente rautenförmig ist. Im gefügten Zustand der beiden Bauteile füllen die Positionierelemente das jeweilige Paar der gegenüberliegenden Nuten vollständig aus. Vorteilhaft bei dieser Positioniervorrichtung ist, daß sich die gewünschten Relativpositionen der zu fügenden Bauteile beim Fügen automatisch ergeben. Zur Überbrückung irgendwelcher Toleranzen ist die bekannte Positioniervorrichtung jedoch nicht vorgesehen. Die Positioniervorrichtung mit ihrer besonderen Formgebung dienen vielmehr dazu, zwischen den gefügten Bauteilen auftretende Scherkräfte abzufangen und umzulenken.

Aus dem DE-Buch: Werkstattbücher, Vorrichtungsbau I (Springer-Verlag, Berlin/Heidelberg/New York 1969, Seiten 28 bis 31) ist eine Spannpatrone mit zwei Spannstellen, eine sog. doppelte Spannzange, bekannt (Bild 130). Diese Spannpatrone ist im wesentlichen um eine Mittelachse rotationssymmetrisch aufgebaut und weist an ihren beiden Enden kegelmantelabschnittförmige Steuerflächen auf. Diese Steuerflächen wirken mit ebenfalls kegelmantelabschnittförmigen Steuerflächen im Innern einer längenveränderlichen Hülse derart zusammen, daß der Radius des freien Innenraums der Spannpatrone beim Verkürzen der Hülse reduziert wird. Um diese Reduktion zu erleichtern bzw. erst zu ermöglichen, sind Längsschlitze in der Spannpatrone vorgesehen. Beim Verlängern der Hülse weitet sich der Radius des Innenraums der Spannpatrone durch deren Eigenelastizität wieder auf. Vorgesehen ist die Spannpatrone zum Spannen von rotationssymmetrischen Gegenständen, insbesondere Stangen in ihrem Innenraum. Eine Anwendung der Spannpatrone beim Fügen von zwei Bauteilen mit gegenüberliegenden Bohrungen in den Bauteilen ist nicht vorgesehen. Die Spannpatrone dient auch nicht zum Positionieren zweier Teile der sie umgebenden Hülse, die nur deshalb zweiteilig ausgebildet ist, um ihre Längenveränderlichkeit zu ermöglichen.

Der Erfindung liegt die Aufgabe zugrunde, eine Positioniervorrichtung der eingangs beschriebenen Art aufzuzeigen, die einen besonders einfachen Aufbau aufweist.

Erfindungsgemäß wird dies dadurch erreicht, daß die verschiebbaren Ausrichtflächen auf einem Kegelmantel um die Symmetrieachse angeordnet sein, wobei die Abstützfläche in der zugeordneten Bohrung konisch mit etwa gleichem Öffnungswinkel wie der Kegelmantel ausgebildet ist. Durch die Verschiebbarkeit der Ausrichtflächen ist die Positioniervorrichtung bei der kontrollierten Überwindung eines Fügespalts zwischen den beiden zu fügenden Bauteilen sowohl in der Lage, Toleranzen zwischen den Abmessungen eines Positionierelements und der zugeordneten Bohrungen, als auch die Toleranzen zwischen den einzelnen Bohrungen in einem Bauteil aufzunehmen. Aufzunehmen bedeutet hierbei nicht das Entstehen von Spiel sondern das Ausmitteln der Toleranzen, wobei eine Relativposition der beiden Bauteile erreicht wird, die in allen Einzelpunkten eine möglichst geringe Abweichung vom Sollwert aufweist. Durch die Verschiebbarkeit der Ausrichtflächen in radialer Richtung wird der Tatsache Rechnung getragen, daß dies auch die Richtung der auftretenden Toleranzen ist. Es versteht sich, daß die Positionierelemente mindestens genauso groß dimensioniert sind wie die zugeordneten Bohrungen, um kein unausgleichbares Spiel zu schaffen. Der Fügespalt zwischen den beiden zu fügenden Bauteilen ist der Spalt, der beim Aufsetzen der Ausrichtflächen auf den Abstützflächen zwischen den Bauteilen verbleibt. Er wird durch eine kontrollierte Spannkraft auf die Bauteile überwunden, wobei die Ausrichtflächen erfindungsgemäß radial einfedern. Konische Positionierelemente weisen bekanntermaßen gute Zentriereigenschaften in entsprechenden konischen Bohrungen auf. Dies wird bei der neuen Positioniervorrichtung ausgenutzt. Hierbei reicht es durch die Verschiebbarkeit der Ausrichtflächen aus, wenn die Abstützflächen in der zugeordneten Bohrung etwa den gleichen Öffnungswinkel wie die Ausrichtflächen aufweisen.

Die neue Positioniervorrichtung kann die ihr gestellte Aufgabe bereits lösen, wenn nur die an den Abstützflächen einer der Bohrungen zur Anlage kommenden Ausrichtflächen erfindungsgemäß ausgebildet sind. Verbesserte Eigenschaften ergeben sich jedoch, wenn alle Ausrichtflächen der Positionierelemente jeweils radial gegen Federkraft verschiebbar und auf einem Kegelmantel angeordnet sind. Damit läßt sich eine noch gleichmäßigere Ausmittelung der auftretenden Toleranzen erzielen. Weiterhin können so überhaupt erst Toleranzen zwischen den Positionierelementen und den Bohrungen in beiden Bauteilen von der Positioniervorrichtung aufgenommen werden.

Der Kegelmantel, auf dem die radial einfedernden Ausrichtflächen angeordnet sind, kann einen Öffnungswinkel größer 25°, insbesondere ca. 30°, aufweisen. Bei einem Öffnungswinkel größer 25° ist sichergestellt, daß sich die Ausrichtflächen der Positionierelemente selbsttätig von den Abstützflächen in den zugeordneten Bohrungen ablösen. Ein Öffnungswinkel von ca. 30° berücksichtigt darüber hinaus die Verkippstabilität der Positionierelemente innerhalb der jeweils einander gegenüberliegenden Bohrungen in den beiden Bauteilen.

Die Positionierelemente können einstückig ausgebildet sein, wobei zwischen den Bereichen der Ausrichtflächen angeordnetes Material die Federkraft aufbringt. Eine besonders unkomplizierte Ausbildung der Positioniervorrichtung ergibt sich, wenn die Federkraft, gegen die die Ausrichtflächen verschiebbar sind, von den Positionierelementen selbst aufgebracht wird. Hierbei ist die Stärke und Art des zwischen den Bereichen der Ausrichtflächen angeordneten Materials für die Größe der Federkraft maßgebend.

Die verschiebbaren Außenflächen können die nach außen vorstehenden Oberflächenbereiche eines unrunden Doppelkegels sein. Überraschenderweise treten die Vorteile der Erfindung bereits bei der Verwendung von unrunden hohlen Doppelkegeln als Positionierelemente auf. Hierbei sind die nach außen vorstehenden Oberflächenbereiche soweit radial nach innen verschiebbar, bis die Positionierelemente ganzflächig an den Abstützflächen in den Bohrungen anliegen. Unrunde Doppelkegel ergeben sich bereits, wenn dünnwandige hohle Doppelkegel ohne besondere Vorsichtsmaßnahmen gehärtet werden. Zumindest die Ausrichtflächen sollten jedoch in jedem Fall auf Form geschliffen sein, um eine flächige Anlage an den Abstützflächen sicherzustellen.

Wenn der eine Kegelmantel des Doppelkegels einen Öffnungswinkel größer 25° aufweist, kann der zweite Kegelmantel einen Öffnungswinkel kleiner 10°, insbesondere ca. 3°, aufweisen. Ein solch kleiner Öffnungswinkel ermöglicht es, das Positionierelement mit den zugehörigen Ausrichtflächen fest und dauerhaft in die Bohrung in einem der beiden zu fügenden Bauteile einzupressen. Auf diese Weise sind die Positionierelemente unverlierbar. Das gleiche Ergebnis wird erreicht, wenn die Positionierelemente einseitig zylindrisch ausgebildet sind und in das eine Bauteil eingepreßt oder eingeklebt werden oder ein Gewinde zum Einschrauben in das eine Bauteil aufweisen. In allen diesen Fällen ist das radiale Einfedern der Ausrichtflächen jedoch dann im wesentlichen auf die auf dem Kegelmantel mit dem größeren Öffnungswinkel angeordneten Ausrichtflächen beschränkt.

Als besonders vorteilhaft ist anzusehen, wenn der hohle Doppelkegel eine zumindest weitgehend konstante Materialdicke aufweist. Hierunter ist zu verstehen, daß auch die Innenflächen des hohlen Doppelkegels einen Doppelkegel begrenzen, wobei die Öffnungswinkel der Kegelmäntel des hohlen Doppelkegels einerseits und des von dessen Innenflächen begrenzten Doppelkegels andererseits übereinstimmen. Erreicht wird auf diese Weise eine genau kontrollierte, dem radialen Verschieben der Ausrichtflächen entgegenwirkende Federkraft. Für den Fall, daß die Positionierelemente nur einseitig kegelförmig ausgebildet sind, versteht sich, daß die Forderung nach der konstanten Materialdicke dort vornehmlich auf den kegeligen Bereich anzuwenden ist.

Bei einer konkreten Ausführungsform können die radial einfedernden Ausrichtflächen der Positionierelemente die stehengelassenen Außenflächen eines teilweise abgeflachten Hohlkegels sein. Es wird also beispielsweise zunächst ein Hohlkegel mit gleichbleibender Materialdicke gedreht. Hierbei entstehen bereits die Ausrichtflächen, die beim Drehen und eventuell anschließendem Schleifen sehr exakt ausrichtbar sind. In einem zweiten Schritt wird der Hohlkegel teilweise abgeflacht, wobei senkrecht zu der Symmetrieachse des Hohlkegels eine Art drehsymmetrische Sternform entsteht. Die Abflachungen sind jedoch nur so geringfügig, daß die Materialdicke des Hohlkegels nicht wesentlich verändert wird. Idealerweise sind die Abflachungen so gewählt, daß sich nach dem Überbrücken des Fügespalts zwischen den beiden zu fügenden Bauteilen auch die abgeflachten Bereiche des Hohlkegels an die Abstützflächen in den Bohrungen der beiden Bauteile anlegen. Dies ist jedoch nur bei Einhaltung geringster Toleranzen hinsichtlich der Bohrungen und der Positionierelemente möglich.

Die Abstützfläche einer Bohrung kann die innere Oberfläche eines in der Bohrung angeordneten Adapterstücks sein. Für die neue Positioniervorrichtung ist es nicht notwendig, daß besondere Bohrungen in den beiden zu fügenden Bauteilen vorgesehen sind. Es reicht vielmehr aus, wenn in bereits vorhandene, zylindrische Bohrungen ein geeignetes Adapterstück eingebracht wird. Hierbei ist natürlich auf eine genaue Passung des Adapterstücks zu achten.

Die Positionierelemente weisen vorteilhaft eine zentrale Durchtrittsöffnung für eine Spannschraube auf. Auf diese Weise werden die zum Ausmitteln der Toleranzen notwendigen Kräfte an der wirkungsvollsten Stelle aufgebracht.

Die Erfindung wird im Folgenden anhand von einigen Ausführungsbeispielen näher erläutert und beschrieben. Es zeigt:
- Figur 1: ein Positionierelement einer ersten Ausführungsform der Positioniervorrichtung,
- Figur 2: die Positioniervorrichtung mit dem Positionierelement gemäß Figur 1,
- Figur 3 und 4: zwei Ansichten eines Positionierelements einer zweiten Ausführungsform der Positioniervorrichtung,
- Figur 5 bis 9: verschiedene Ansichten von Positionierelementen weiterer Ausführungsformen der Positioniervorrichtung und entsprechende Positioniervorrichtungen.

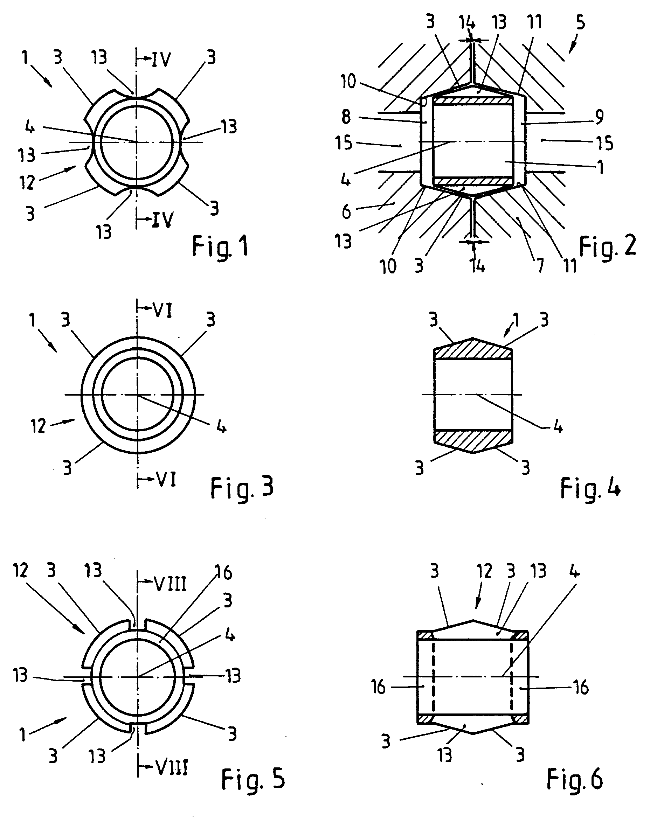

Bei dem in Figur 1 dargestellten Positionierelement 1 handelt es sich um einen einstückig ausgebildeten hohlen Doppelkegel 12. Nach außen vorstehende, auf zwei Kegelmänteln angeordnete Oberflächenbereiche des Doppelkegels 12 bilden Ausrichtflächen 3 des Positionierelements 1. Die Ausrichtflächen 3 sind drehsymmetrisch um eine Symmetrieachse 4 des Positionierelements 1 verteilt. Die Ausrichtflächen 3 des Positionierelements sind gegen Federkraft in radialer Richtung zur Symmetrieachse 4 verschiebbar. Die Federkraft wird dabei von den zwischen den Ausrichtflächen 3 angeordneten Bereichen aufgebracht. Hier sind Aussparungen 13 vorgesehen. Im Bereich der Aussparungen 13 ist das Material des Doppelkegels 12 geschwächt, so daß die radiale Verschiebung der Ausrichtflächen 3 mit kontrollierbarem, vergleichsweise geringem Kraftaufwand möglich ist.

Figur 2 zeigt eine Positioniervorrichtung 5 mit dem Positionierelement 1 gemäß Figur 1 im Querschnitt. In zwei zu fügenden Bauteilen 6 und 7 sind gegenüberliegend Bohrungen 8 und 9 vorgesehen. In den Bohrungen 8 und 9 sind die Abstützflächen 10 und 11 konisch und mit etwa dem gleichen Öffnungswinkeln wie die Ausrichtflächen 3 des Positionierelements 1 vorgesehen. Beim Fügen der Bauteile 6 und 7 mit der Positioniervorrichtung 5 gemäß Figur 4 verbleibt zunächst ein Fügespalt 14 von typischerweise 0,4 bis 0,5 mm, der dann beim Aufbringen einer Spannkraft überbrückt wird. Ein Teil der Spannkraft wird dabei durch die schräge Ausrichtung der Abstützflächen 10 und 11 sowie der Ausrichtflächen 3 zum radialen Verschieben der Ausrichtflächen 3 nach innen verwendet. Sind mehrere Positionierelemente 1 vorgesehen, so stellt sich ein Zustand mit einem Gleichgewicht der Federkräfte ein. Auf diese Weise werden sämtliche beim Fügen auftretenden Toleranzen, ohne daß Spiel entsteht, ausgemittelt. Zum Aufbringen der Spannkraft mit einer hier nicht dargestellten Spannschraube ist eine zentrale Durchtrittsöffnung 15 sowohl in dem Positionierelement 1 als auch in den Bauteilen 6 und 7 vorgesehen. Die zentrale Durchtrittsöffnung in den Bauteilen 6 und 7 ist eine Fortsetzung der Bohrungen 8 und 9.

Das in den Figuren 3 und 4 dargestellte Positionierelement 1 entspricht weitgehend der Ausführungsform des Positionierelements 1 gemäß den Figuren 3 und 4. Auch hier handelt es sich um einen hohlen Doppelkegel. Allerdings sind keine Aussparungen 13 vorgesehen. Die Verschiebbarkeit der Ausrichtflächen 3 ergibt sich ausschl. dadurch, daß der Doppelkegel bewußt unrund vorgesehen ist, wobei die nach außen vorstehenden Oberflächenbereiche die verschiebbaren Ausrichtflächen 3 bilden.

Das in den Figuren 5 und 6 dargestellte Positionierelement 1 weist ebenfalls viele Gemeinsamkeiten mit der Ausführungsform des Positionierelements 1 gemäß den Figuren 3 und 4 auf. Hier sind wieder Aufsparungen 13 zwischen den Ausrichtflächen 3 in den Doppelkegel 12 vorgesehen. Die Aussparungen 13 durchtrennen das Material des Doppelkegels nahezu vollständig. Nur im Bereich von an dem Doppelkegel 12 angesetzten Zentrierzapfen verbleibt Material zwischen den Ausrichtflächen 3. Durch Umfang und Art dieses Materials ist die Federkraft, gegen die die Ausrichtflächen 3 radial verschiebbar sind, in weiten Grenzen variierbar. So läßt sich auch ein großer, leicht überwindbarer Fügespalt realisieren, der zur Aktivierung der Ausmittelung der Toleranzen schrittweise überbrückbar ist, wobei noch keine Reibung zwischen den zu fügenden Bauteilen auftritt.

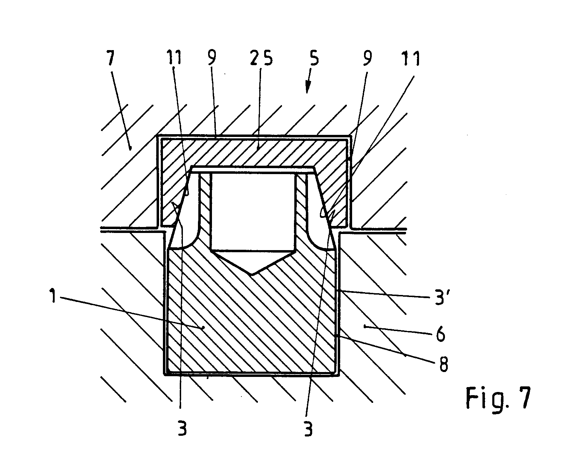

Die in Figur 7 dargestellte Ausführungsform der Positioniervorrichtung 5 weist ein Positionierelement 1 auf, dessen der Bohrung 8 in dem Bauteil 6 zugeordneten Ausrichtflächen 3' nicht verschiebbar ausgebildet sind. Vielmehr entspricht der der Bohrung 8 zugeordnete Teil des Positionierelements 1 einem normalen Paßstift. In der Bohrung 9 in dem Bauteil 7 ist ein Adapterstück 25 angeordnet, an dem die Abstützfläche 11 ausgebildet ist. Auf diese Weise läßt sich die neue Positioniervorrichtung 5 auch unter Verwendung schon vorhandener zylindrischer Bohrungen 8 und 9 zum Einsatz bringen, ohne daß auf die Vorteile der auf einem Kegelmantel angeordneten Ausrichtflächen 3 verzichtet werden muß. Der Vorteil der konischen Ausrichtflächen 3 ist darin zu sehen, daß das zum Überbrücken der Toleranzen notwendige radiale Verschieben der Ausrichtflächen kontinuierlich während des Aufbringens der Spannkraft für die beiden Bauteile erfolgt. So kann in einem ersten Schritt der Fügespalt teilweise überbrückt werden, um alle Positionierelemente zu aktivieren. Hierbei tritt noch keine das Ausmitteln der Toleranzen behindernde Reibung zwischen den Bauteilen auf. Anschließend ist beim entgültigen Spannen der beiden Bauteile auch der Rest des Fügespalts zu überbrücken. Es versteht sich, daß ein Positionierelement 1 mit nur einer Bohrung 9 zugeordneten, radial einfedernden Ausrichtflächen 3 zu einem kleineren Fügespalt 14 führt, als ein beispielsweise als symmetrischer Doppelkegel ausgebildetes Positionierelement.

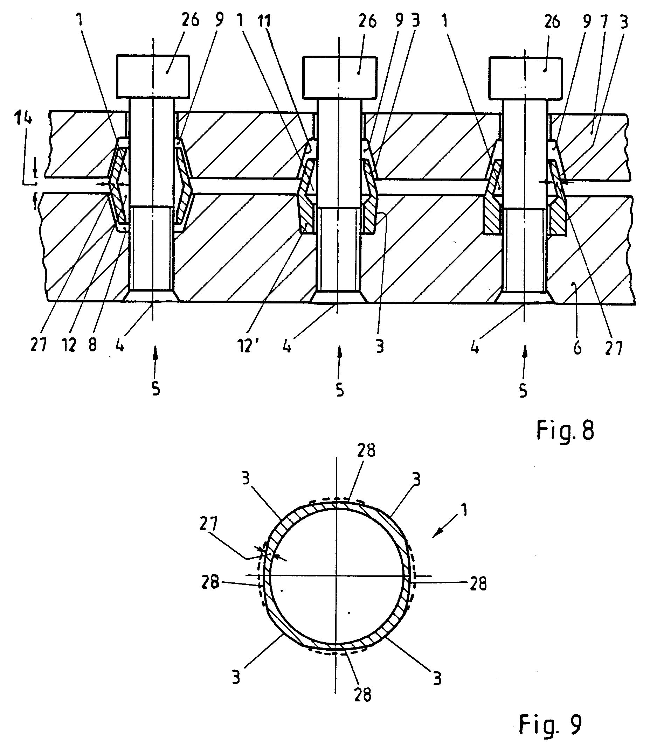

Drei weitere Ausführungsformen der Positioniervorrichtung 5 bzw. des Positionierelements 1 sind in Figur 8 wiedergegeben. Dabei sind jeweils auch die durch die Positionierelemente 1 hindurchgreifenden Spannschrauben 26 dargestellt. Das links wiedergegebene Positionierelement 1 ist ein Doppelkegel 12 mit weitgehend konstanter Materialdicke 27. Diese wirkt sich günstig auf den Kraft- bzw. Drehmomentverlauf beim Überbrücken des Fügespalts 14 mit den Spannschrauben 26 aus.

Bei dem in der Mitte wiedergegebenen Positionierelement 1 handelt es sich um einen Doppelkegel 12', der allerdings im Gegensatz zu den bisher beschriebenen Doppelkegeln nicht symmetrisch zu dem Fügespalt 14 aufgebaut ist. Vielmehr weist er in seinem dem Bauteil 6 zugeordneten Bereich die Ausrichtflächen 3 auf einem Kegelmantel mit einem Öffnungswinkel von nur ca. 3° auf. Der Kegelmantel der gegenüberliegenden, dem Bauteil 7 zugeordneten Ausrichtflächen 3 hat demgegenüber einen Öffnungswinkel von ca. 30°, wie er in etwa auch allen bisherigen Ausführungsbeispielen entspricht. Die Ausrichtflächen 3 auf dem 2°-Kegelmantel spielen für die Positionierwirkung des Doppelkegels 12' gemäß Figur 8 nur eine untergeordnete Rolle. Sie dienen vielmehr zum unverlierbaren Einpressen des Doppelkegels 12' in das Bauteil 6.

Ähnliches gilt für das in Figur 8 rechts wiedergegebene Positionierelement 1. Auch hier ist der aktive Bereich des Positionierelements 1 dem Bauteil 7 zugeordnet, wobei es sich um einen Hohlkegel mit weitgehend gleichbleibender Materialdicke 27 und einem Öffnungswinkel des den Ausrichtflächen 3 zugeordneten Kegelmantels von ca. 30° handelt. Der gegenüberliegende Bereich des Positionierelements 1 ist im Gegensatz dazu als Hohlzylinder ausgebildet und zum Einkleben oder Einpressen in das Bauteil 6 vorgesehen.

Figur 9 zeigt einen Querschnitt durch eines der Positionierelemente 1 gemäß Figur 8 im Bereich des Bauteils 7. Der Schnitt verläuft senkrecht zur Symmetrieachse 4. Dabei ist zu erkennen, daß die Ausrichtfläche 3 die verbleibenden Außenflächen eines mit Abflachungen 28 versehenen, rotationssymmetrisch zu der Symmetrieachse 4 ausgebildeten Hohlkegels sind. Die Abflachungen 28 weisen jedoch nur eine geringe Tiefe auf, so daß die Materialdicke 27 über den Umfang des Positionierelements 1 dennoch weitgehend konstant ist. Bei idealer Ausbildung der Abflachungen 28 liegen die Positionierelemente 1 nach dem Überbrücken des Fügespalts 14 ganzflächig an den Abstützflächen 11 in den Bohrungen 9 in dem Bauteil 7 an.

## Patentansprüche

1. Positioniervorrichtung für zwei zu fügende Bauteile mit gegenüberliegenden Bohrungen in den beiden Bauteilen und mit eine Symmetrieachse sowie Ausrichtflächen aufweisenden Positionierelementen, wobei die Ausrichtflächen zur Anlage an Abstützflächen in den Bohrungen vorgesehen sind, und wobei zumindest die an den Abstützflächen einer der Bohrungen zur Anlage kommenden Ausrichtflächen der Positionierelemente in radialer Richtung zur Symmetrieachse gegen Federkraft verschiebbar ausgebildet sind, dadurch gekennzeichnet, daß die verschiebbaren Ausrichtflächen (3) auf einem Kegelmantel um die Symmetrieachse (4) angeordnet sind, wobei die Abstützfläche (10, 11) in der zugeordneten Bohrung (8, 9) konisch mit etwa gleichem Öffnungswinkel wie der Kegelmantel ausgebildet ist.

2. Positioniervorrichtung nach Anspruch 1, dadurch gekennzeichnet, daß die an den Abstützflächen beider Bohrungen (8, 9) zur Anlage kommenden Ausrichtflächen (3) der Positionierelemente (1) radial gegen Federkraft verschiebbar ausgebildet sind.

3. Positioniervorrichtung nach Anspruch 1 oder 2, dadurch gekennzeichnet, daß der Kegelmantel einen Öffnungswinkel größer 25°, insbesondere ca. 30°, aufweist.

4. Positioniervorrichtung nach einem der Ansprüche 1 bis 3, dadurch gekennzeichnet, daß die Positionierelemente (1) einstückig ausgebildet sind, wobei zwischen den Bereichen der Ausrichtflächen (3) angeordnetes Material die Federkraft aufbringt.

5. Positioniervorrichtung nach Anspruch 4, dadurch gekennzeichnet, daß die verschiebbaren Ausrichtflächen (3) die nach außen vorstehenden Oberflächenbereiche eines unrunden hohlen Doppelkegels (12) sind.

6. Positioniervorrichtung nach den Ansprüchen 3 und 5, dadurch gekennzeichnet, daß der zweite Kegelmantel einen Öffnungswinkel kleiner 10°, insbesondere ca. 3°, aufweist.

7. Positioniervorrichtung nach einem der Ansprüche 5 oder 6, dadurch gekennzeichnet, daß der hohle Doppelkegel (12) eine weitgehend konstante Materialdicke aufweist.

8. Positioniervorrichtung nach einem der Ansprüche 4 bis 7, dadurch gekennzeichnet, daß die Ausrichtflächen (3) die stehengelassenen Außenflächen eines teilweise abgeflachten Hohlkegels sind.

9. Positioniervorrichtung nach einem der Ansprüche 1 bis 8, dadurch gekennzeichnet, daß die Abstützfläche (10, 11) einer Bohrung (8, 9) die innere Oberfläche eines in der Bohrung (8, 9) angeordneten Adapterstücks (25) ist.

10. Positioniervorrichtung nach einem der Ansprüche 1 bis 9, dadurch gekennzeichnet, daß die Positionierelemente (1) eine zentrale Durchtrittsöffnung (15) für eine Spannschraube aufweisen.
